Europäisches Patentamt

European Patent Office

Office européen des brevets

(19)

(11) Numéro de publication: **0 138 629**
**B1**

(12) **FASCICULE DE BREVET EUROPEEN**

(45) Date de publication du fascicule du brevet: **13.07.88**

(51) Int. Cl.⁴: **A 01 K 11/00**

(21) Numéro de dépôt: **84400791.4**

(22) Date de dépôt: **19.04.84**

(54) **Boucle d'identification du bétail.**

(30) Priorité: **25.08.83 FR 8313722**

(43) Date de publication de la demande:
**24.04.85 Bulletin 85/17**

(45) Mention de la délivrance du brevet:
**13.07.88 Bulletin 88/28**

(84) Etats contractants désignés:
**BE CH DE GB IT LI NL**

(56) Documents cités:
**EP-A-0 056 533**
**FR-A-2 487 634**

(73) Titulaire: **CHEVILLOT**
**119 Rue Vieille du Temple**
**F-75003 Paris (FR)**

(72) Inventeur: **Basson Chevillot, Béatrix**
**10 Avenue Paul Déroulède**
**F-94300 Vincennes (FR)**

(74) Mandataire: **CABINET BONNET-THIRION**
**95 Boulevard Beaumarchais**
**F-75003 Paris (FR)**

EP 0 138 629 B1

Courier Press, Leamington Spa, England.

## Description

La présente invention se rapporte à une boucle d'identification du bétail, comportant deux parties encliquetables l'une dans l'autre, une partie dite mâle ayant une tige et une tête pointue élargie et séparée de la tige par un épaulement conique rentrant, ladite tige étant destinée à traverser l'oreille de l'animal, et une partie dite femelle ayant un oeillet fermé par un capuchon et adapté à être franchi par la dite tête, cette tête restant ensuite accrochée par retenue dudit épaulement conique contre une portée conique complémentaire de l'oeillet, ledit capuchon présentant une base annulaire qui ceinture l'oeillet au voisinage de ladite portée conique.

La forme conique de l'épaulement de la tête de la tige de la partie mâle et de la portée correspondante de l'oeillet de la partie femelle, constitue un moyen d'inviolabilité destiné à empêcher les fraudes, tandis que le capuchon qui ferme l'oeillet constitue un moyen d'inaccessibilité destiné à renforcer l'efficacité du moyen d'inviolabilité.

Mais les boucles de ce type, comme celle décrité dans le document EP—A—56 333, qui ont été proposées jusqu'à présent, si dissuasives soient-elles contre les tentatives de fraude, n'apportent pas une garantie absolue.

En effet, il est apparu que les fraudeurs essayent de récupérer des boucles à l'abattoir ou directement sur des animaux pour les replacer sur d'autres animaux. De telles actions sont frauduleuses puisqu'elles se traduisent par une tromperie sur la marchandise et reviennent, dans un but lucratif, à enfreindre les régles sanitaires.

La présente invention a pour objet une boucle d'identification du bétail du type indiqué ci-dessus qui permet, mieux que parle passé, d'empêcher la fraude ou tout au moins de la rendre parfaitement détectable.

Suivant l'invention, une telle boucle comporte un capuchon qui forme une pièce distincte et a une dureté supérieure à celle de l'oeillet et qui présente une base annulaire qui ceinture l'oeillet suivant une zone de ceinturage à profil en gradin par laquelle il est fixé audit oeillet.

Grâce à une telle disposition, le capuchon constitue, par sa base, une armature extrèmement rigide qui n'empêche pas le franchissement de la tête de la partie mâle au moment de la fermeture de la boucle mais, qui, une fois la boucle ainsi fermée, s'oppose totalement à un retrait de la partie mâle hors de la partie femelle. Ce verrouillage est rendue particulièrement efficace par ls fait que l'armature constituée par la base du capuchon rigide se trouve légèrement en arrière de la portée conique, ceci en combinaison avec un angle de conicité d'environ 45°.

Si un fraudeur cherche à éliminer le capuchon dans le but de défaire une bouche, il doit coup le capuchon, mais, dans ce cas, la faute apparaît d'une manière évidente. Le fraudeur peut également essayer de détruire le capuchon en l'enfonçant dans la pointe de la partie mâle, mais des traces très visibles apparaissent alors, et la fraude est, là également, parfaitement apparente. Si le fraudeur essaye de séparer les deux parties de la boucle en les éloignant l'une de l'autre, il ne peut le faire sans détériorer le capuchon dont la base verrouillage d'une manière extrêmement solide l'oeillet dans lequel la tête de la partie mâle se trouve engagée. Il ne pourra donc pas, de cette façon, obtenir des parties mâle et femelle séparées l'une de l'autre, qui soient parfaitement intactes pour pouvoir être remplacées impunément sur un autre animal. Si le fraudeur parvient à récupérer l'une des deux parties de la boucle sans l'avoir endommagée tandis que l'autre partie de la boucle est elle'même endommagée, cette action sera inutile puisque dans le commerce des pièces indépendantes, convenablement numérotées, qui permettraient au fraudeur de reconstituer une boucle complète, ne sont pas livrées.

Dans ces conditions, la boucle suivant l'invention apporte une sécurité quasiment absolue qui permet de faire respecter les règles sanitaires et évite toute tromperies sur la marchandise.

D'excellents résultats sont obtenus lorsque la dureté SHORE (norme internationale ISO 868) de l'oeillet est environ 95A tandis que la dureté SHORE du capuchon est environ 74D.

De préférence, la zone de ceinturage de l'oeillet par la base du capuchon est disposée dans un prolongement vers l'arrière de la portée conique de l'oeillet, Cette zone de ceinturage a avantageusement un profil en gradin.

On obtient ainsi un verrouillage extrèmement efficace de la tête de la partie mâle lorsque celle-ci a été engagée dans l'oeillet de la partie femelle.

Le capuchon peut être fixé à l'oeillet par tous moyens appropriés et par exemple avantageusement par soudage par effet de fusion ou d'adhérisation suivant la zone de ceinturage.

Dans un mode de réalisation, le capuchon est prévu transparent, ce qui permet d'inspector la tête de la partie mâle. Ce capuchon peut également être prévu opaque pour dissimuler, vis-à-vis des fraudeurs éventuels, la nature de ce que contient ce capuchon et rendre ainsi leur intervention plus aventureuse. Le capuchon présence de préférence un petit trou d'aération qui a pour effet d'augmenter les performances d'hygiène de la boucle.

Suivant une autre caractéristique, la tige de la partie mâle présente une région intermédiaire amincie de façon à s'elfiler ostensiblement en cas de tentative frauduleuse d'étirement. Dans ces conditions, si un fraudeur essaye de séparer la partie mâle de la partie femelle en agissant par traction, la tige de la partie mâle s'étire d'une manière telle qu'il devient désormais impossible de la réencliquerter dans un oeillet de partie femelle. Il peut même en résulter une rupture de la tête de la tige de la partie mâle. Cette tête reste prisonnière dans la partie femelle et, là également, la tentative de fraude est vouée à l'échec.

De préférence, la tête de la tige de la partie mâle comporte, à l'avant, une ogive dure ancrée dans la tête par une queue ayant une collerette, cette queue étant prolongée vers l'arrière jusqu'au voisinage de l'épaulement conique rentrant. Cette disposition a pour résultat d'augmenter la sécurité contre les tentatives de fraude. Après que la tête de la partie mâle a été introduite dans l'oeillet, la zone de contact de l'épaulement conique de la tête de la partie mâle et de la portée conique de l'oeillet de la partie femelle, se trouve en quelque sorte bordée tant à l'arrière par la base du capuchon rigide qu'à l'avant par l'ogive également rigide. Il y a donc, dans ces conditions, un verrouillage à double effet que rend pratiquement impossible tout tentative de fraude.

Une forme d'exécution de l'invention est ci-après décrite, à titre d'exemple, en référence aux dessins annexés dans lesquels:

la figure 1 est une vue en perspective d'une boucle suivant l'invention montrant les deux parties de la boucle séparées;

la figure 2 est une vue en coupe de ces deux parties séparées de la boucle;

la figure 3 est une vue analogue à la figure 2, mais après encliquetage des deux parties de la boucle;

la figure 4 montre en perspective une tenaille pour la pose de la boucle sur l'oreille de l'animal.

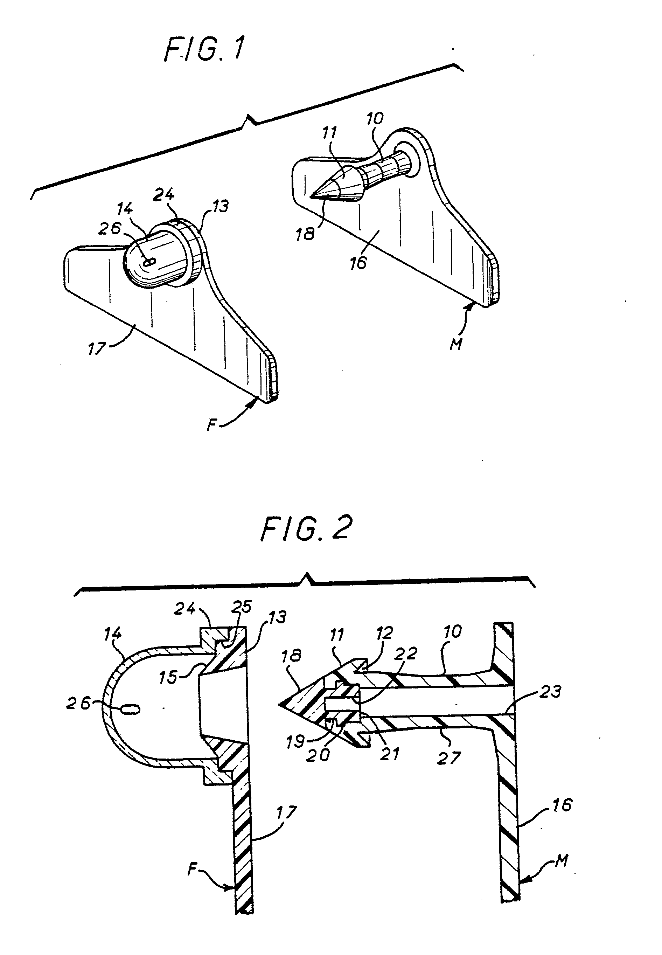

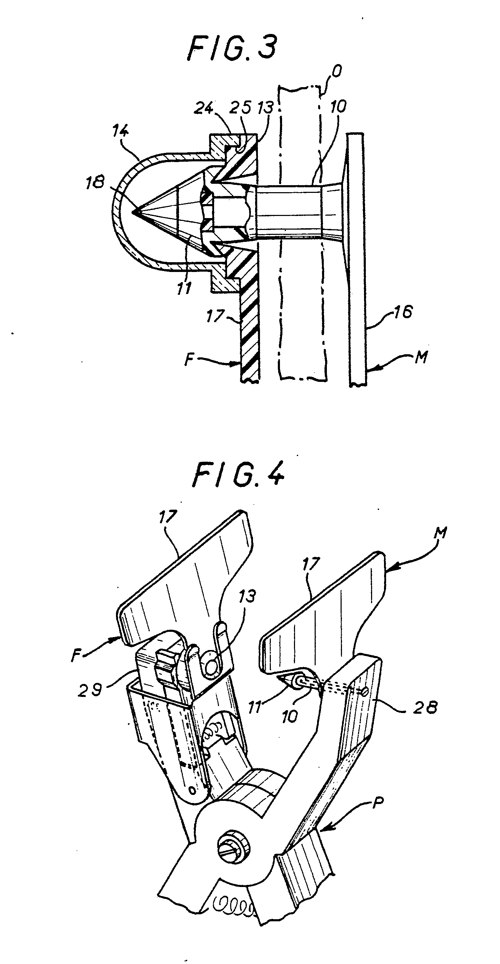

Dans le mode de réalisation représenté à titre d'exemple aux figures 1 à 4, une boucle d'identification du bétail comporte deux parties M et F encliquetables l'une dans l'autre: une partie mâle M ayant une tige 10 et une tête 11. Cette tête 11 est pointue et élargie en étant séparée de la tige 10 par un épaulement conique rentrant 12. La tige 10 est destinée à traverser l'oreille 0 de l'animal (figure 3). L'autre partie F est femelle et a un oeillet 13 fermé par un capuchon 14. L'oeillet 13 est adapté à être franchi par la tête 11, celle-ci restant ensuite accrochée par retenue de l'épaulement conique 12 contre une portée conique complémentaire 15 de l'oeillet 13.

On voit à la figure 3 la boucle formée des deux parties F et M, telle que posée sur l'oreille 0 de l'animal avec la tête 11 accrochée en 12, 15 derrière l'oeillet 13.

Le capuchon 14 entoure le pointe 11 et évite les risques de blessure par cette pointe 11 (figure 3).

La partie mâle M et la partie femelle F comportent respectivement des plateaux 16 et 17. Les signes d'identification de l'animal sont portés par l'un et/ou l'autre plateaux 16 et 17.

La partie mâle M et la partie femelle F de la boucle sont faites en une matière plastique relativement souple qui permet une bonne tenue de la boucle sur l'oreille 0 et l'animal et évite, grâce à la relative flexibilité de la tige 10, un arrachement de la boucle dans les arbustes ou les clôtures.

Cette matière plastique a de préférence une dureté SHORE (norme internationale ISO 868) d'environ 95A.

La tête 11 de la tige 10 de la partie mâle M (figure 2) comporte à l'avant une ogive dure 18. Cette ogive dure 18 est ancrée dans la tête 11 par une queue 19 ayant une collerette 20, cette queue étant prolongée vers l'arrière en 21 jusqu'au voisinage de l'épaulement conique rentrant 12 de la tête 11. Cette ogive dure 18, par exemple en plastique ou en métal, est destinée à faciliter la pénétration dans l'oreille 0 de l'animal. La queue 19 de l'ogive dure 18 comporte un trou borgne 22 tandis que la tige 10 est prévue creuse en 23, ceci pour permettre un engagement des trous 22 et 23 sur un doigt de guidage G d'un outil appropré P (figure 4) en vue de la pose de la boucle à l'aide de cet outil P.

D'une manière plus détaillée, le capuchon 14, en matière plastique ou en métal de préférence rendu inoxydable par plastification, est prévu avec une dureté supérieure à celle de l'oeillet 13.

Alors que la dureté SHORE de l'oeillet est d'environ 95A, ainsi qu'il a été indiqué ci-dessus, la dureté SHORE du capuchon est largement supérieure et est choisie d'environ 74D.

Le capuchon 14 présente une base ouverte annulaire 24. Cette base 24 ceinture l'oeillet 13 au voisinage et légèrement en arrière de la portée conique 15.

L'angle de conicité de cette portée conique 15 et l'angle de conicité de l'épaulement conique rentrant 12 sont les mêmes, de manière à permettre une excellente application dans la zone de retenue 12—15. Cet angle est avantageusement d'environ 45°.

Comme on le voit à la figure 2, la zone de ceinturage 25 de l'oeillet 13 par la base 24 du capuchon 14 est disposée dans un prolongement vers l'arrière de la portée conique 15 de l'oeillet 13.

Cette zone de ceinturage 25 a un profil en gradin.

Le capuchon 14 est fixé à l'oeillet 13 par tous moyens appropriées, de préférence par soudage par effet de fusion ou d'adhérisation suivant la zone de ceinturage en gradin 25.

Le capuchon 14 est avantageusement transparent, ce qui permet d'inspector la tête 11 de la partie mâle M lorsque la boucle est posée sur l'oreille 0 de l'animal. En variante, le capuchon 14 est prévu opaque pour dissimuler aux fraudeurs éventuels l'aspect du contenu de ce capuchon. En outre, le capuchon transparent 14 présente un petit trou d'aération 26 qui favorise les conditions d'hygiène.

Le capuchon 14 est destiné à être serré de manière centrée par une pince élastique E de l'outil P (figure 4) en vue de la pose de la boucle à l'aide de cet outil P.

La tige 10 de la partie mâle M présente une région intermédiaire amincie 27 de façon à s'effiler ostensiblement en cas de tentative frauduleuse d'étirement.

Pour poser la boucle sur l'oreille 0 de l'animal on utilise l'outil P représenté à la figure 4, constitué par une tenaille. On place la partie mâle M et la partie femelle F de la boucle sur le doigt de guidage G et dans la pince élastique E prévus sur les deux branches 28 et 29 de la tenaille, respectivement. L'oeillet 13 est prêt à recevoir la pointe 11 de la tige 10 de la partie mâle M. Il suffit dès lors de placer l'oreille 0 de l'animal entre la pointe 11 et l'oeillet 13 et de serrer l'outil par rapprochement des branches 28 et 29. La pointe 11 et la tige 10 traversent l'oreille 0 de l'animal. La pointe 11 franchit l'oeillet 13 et devient verrouillée sur celui-ci, comme représenté à la figure 3.

Grâce à l'invention, toute tentative frauduleuse pour enlever la boucle de l'oreille de l'animal est vouée à l'échec. En effet, la zone d'appui en 12—15 se trouve bordée aussi bien à l'arrière qu'à l'avant par des armatures rigides: à l'arrière, l'armature rigide est constituée par la base 24 du capuchon 14 et, à l'avant, par la queue 19 de l'ogive 18. Le verrouillage suivant les zones coniques à 45°, en 12 et 15, est extrêmement efficace.

Toute tentative de séparation des parties M et F de la boucle par traction, se traduira inévitablement par un allongement intempestif de la tige 10, en raison de sa région amincie 27, avant que la tête 11 ne risque de se détacher de l'oeillet. La partie mâle devient, de toute façon, désormais inutilisable pour pouvoir être replacée sur un autre animal, sans que la fraude apparaisse d'une manière extrêmement évidente.

Par ailleurs, si le fraudeur essaye de détacher la tête 11 de l'oeillet 13, en sacrifiant le capuchon de manière à avoir un meilleur accès à la zone 12—15, l'aspect détérioré du capuchon 14 rendra, là également, la fraude immédiatement apparente.

La boucle suivant l'invention apporte donc une garantie quasiment parfaite contre les tentatives de fraude et permet ainsi un respect absolu des régles sanitaires et évite toute tromperie sur la marchandise.

On appréciera la construction particulièrement simple et commode de la boucle suivant l'invention, ainsi que la façon dont elle peut être posée d'une manière très facile sur l'oreille 0 de l'animal, grâce à la tenaille P.

Bien entendu, l'invention n'est pas limitée à la forme d'exécution décrite et représentée, mais embrasse toutes variantes dans la réalisation de ses divers éléments et dans ses applications, dans le cadre des revendications. En particulier, un insert de renforcement en matière dure peut, si besoin est, prévu noyé dans l'oeillet 13 au voisinage de la portée conique 15. En outre, il est à noter que le capuchon 14 peut être prévu métallique et moulé dans l'oeillet en étant entouré par une couche de matière plastique faisant corps avec l'oeillet.

## Revendications

1. Boucle d'identification du bétail comportant deux parties encliquetables l'une dans l'autre, une partie dite mâle (M) ayant une tige (10) et une tête pointue (11) élargie et séparée de la tige par un épaulement conique rentrant (12), ladite tigé étant destinée à traverser l'oreille de l'animal, et une partie dite femelle (F) ayant un oeillet (13) fermé par un capuchon (14) et adapté à être franchi par ladite tête (11), cette tête restant ensuite accrochée par retenue dudit épaulement conique contre une porté conique complémentaire (15) de l'oeillet, ledit capuchon présentant une base annulaire (24) qui ceinture l'oeillet au voisinage de ladite portée conique, caractérisée en ce que ledit capuchon (14) forme une pièce distincte et a une dureté supérieure à celle de l'oeillet (15) et en ce que ladite base annulaire (24) ceinture ledit oeillet (15) suivant une zone de ceinturage (25) à profil en gradin, ledit capuchon (14) étant fixé audit oeillet (13) le long de ladite zone de ceinturage (25).

2. Boucle selon la revendication 1, caractérisée en ce que la dureté SHORE de l'oeillet est environ 95A, tandis que la dureté SHORE du capuchon est environ 74D.

3. Boucle selon la revendication 1 ou 2, caractérisée en ce que ladite zone de ceinturage (25) de l'oeillet (13) est disposée en arrière de la portée conique (15) dudit oeillet.

4. Boucle selon l'une quelconque des revendications 1 à 3, caractérisée en ce que ledit capuchon (14) est fixé audit oeillet (13) par soudage le long de ladite zone de ceinturage (25).

5. Boucle selon l'une quelconque des revendications 1 à 4, caractérisée en ce que ledit capuchon (14) présente un trou d'aération (26).

6. Boucle selon l'une quelconque des revendications 1 à 5, dans laquelle ladite tête (11) de la tige (10) de la partie mâle (M) comporte à l'avant une ogive dure (18) ancrée dans ladite tête (11) par une queue (19) ayant une collerette (20), caractérisée en ce que ladite queue (19) se prolonge vers l'arrière jusqu'au voisinage de l'épaulement conique rentrant (12) de ladite tête (11).

7. Boucle selon l'une quelconque des revendications 1 à 6, caractérisée en ce que la tige (10) de la partie mâle (M) présente une zone intermédiaire amincie (27) de manière à s'effiler en cas de tentative frauduleuse d'étirement.

## Patentansprüche

1. Viehkennzeichnungsmarke mit zwei ineinander einrastbaren Teilen, wovon der eine, der sogenannte Steckerteil, (M) einen Stift (10) und einen spitzen Kopf (11), der verdickt und vom Stift durch eine zurückspringende konische Schulter (12) abgesetzt ist, aufweist und der Stift zum Durchdringen des Tierohres bestimmt ist, und der andere, der sogenannte Buchsenteil (F) eine Öse (13) aufweist, die von einer Kappe (14) abgeschlossen und dafür eingerichtet ist, daß sie vom Kopf (11) durchsetzt wird, wobei dieser Kopf danach angehängt bleibt, indem die konische Schulter gegen eine komplementäre konische Auflagefläche (15) der Öse anschlägt, und wobei die Kappe eine ringförmige Basis (24) aufweist, welche die Öse in der Nähe der konischen Auflagefläche umgibt, dadurch gekennzeichnet, daß die Kappe (14) ein gesondertes Teil bildet und eine größere Härte als die der Öse (13) hat und daß die ringförmige Basis (24) die Öse (13) in einer ein Stufenprofil aufweisenden Gürtelzone (25) umgibt und die Kappe (14) an der Öse (13) längs dieser Gürtelzone (25) befestigt ist.

2. Marke nach Anspruch 1, dadurch gekennzeichnet, daß die SHORE-Härte der Öse etwa 95A, dagegen die SHORE-Härte der Kappe etwa 74D beträgt.

3. Marke nach Anspruch 1 oder 2, dadurch gekennzeichnet, daß die Gürtelzone (25) der Öse (13) hinter der konischen Auflagefläche (15) der Öse angeordnet ist.

4. Marke nach irgendeinem der Ansprüche 1 bis 3, dadurch gekennzeichnet, daß die Kappe (14) an der Öse (13) durch Verschweißen längs der Gürtelzone (25) befestigt ist.

5. Marke nach irgendeinem der Ansprüche 1 bis 4, dadurch gekennzeichnet, daß die Kappe (14) ein Belüftungsloch (26) aufweist.

6. Marke nach irgendeinem der Ansprüche 1 bis 5, bei der der Kopf (11) des Stiftes (10) des Steckerteils (M) vorn einer harte Spitze (18) aufweist, die im Kopf (11) durch einen Schaft (19) verankert ist, der einen Kragen (20) aufweist, dadurch gekennzeichnet, daß der Schaft (19) nach hinten bis in die Nähe der zurückspringenden konischen Schulter (12) des Kopfes (11) verlängert ist.

7. Marke nach irgendeinem der Ansprüche 1 bis 6, dadurch gekennzeichnet, daß der Stift (10) des Steckerteils (M) eine verjüngte Zwischenzone (27) aufweist, die im Fall eines betrügerischen Versuchs des Herausziehens dünner wird.

**Claims**

1. Tag for identification of livestock comprising two portions which can be latched one inside the other, a so-called male portion (M) having a stem (10) and a wider pointed head (11) separated from the stem by a receding conical shoulder (12), said stem being intended to pass through the ear of the animal, and a so-called femele portion (F) having an eye (13) closed by cap (14) and adapted to be traversed by said head (11), this head thereafter remaining latched by retention of said conical shoulder against a complementary conical bearing surface (15) of the eye, said cap exhibiting an annular base (24) which surrounds the eye in the vicinity of said conical bearing surface, characterised in that said cap (14) forms a separate component and has a hardness greater than that of the eye (13), and in that said annular base (24) surrounds said eye (13) along a surrounding zone (25) of stepped profile, said cap (14) being fixed to said eye (13) along said surrounding zone (25).

2. Tag according to claim 1, characterised in that the SHORE hardness of the eye is about 95A, while the SHORE hardness of the cap is about 74D.

3. Tag according to claim 1 or 2, characterised in that said surrounding zone (25) of the eye (13) is disposed behind the conical bearing surface (15) of said eye.

4. Tag according to any of claims 1 to 3, characterised in that said cap (14) is fixed to said eye (13) by welding along said surrounding zone (25).

5. Tag according to any of claims 1 to 4, characterised in that said cap (14) exhibits a ventilation hole (26).

6. Tag according to any of claims 1 to 5, in which said head (11) of the stem (10) of the male portion (M) comprises at the front a hard nose (18) anchored in said head (11) by a tail (19) having a collar (20), characterised in that said tail (19) extends rearwardly into the vicinity of the receding conical shoulder (12) of said head (11).

7. Tag according to any of claims 1 to 6, characterised in that the rod (10) of the male portion (M) exhibits a thinner intermediate zone (27) so as to taper in case of a fraudulent attempt at withdrawal.

# FIG. 1

# FIG. 2

# FIG. 3

# FIG. 4